# EUROPÄISCHE PATENTSCHRIFT

(11) **EP 2 189 955 B1**
(45) Veröffentlichungstag und Bekanntmachung des Hinweises auf die Patenterteilung: **29.08.2012**
(21) Anmeldenummer: 09173394.9
(22) Anmeldetag: 19.10.2009
(51) Int. Cl.: G08B 13/194, G08B 13/196, H04N 7/18, G06K 9/00, G06Q 10/00

(54) **Sensornetzwerksystem, Übertragungsprotokoll, Verfahren zum Wiedererkennen eines Objekts sowie Computerprogramm**
Sensor network system, transfer protocol, method for recognising an object and computer program
Système de réseau de capteurs, protocole de transmission, procédé de reconnaissance d'un objet et programme informatique

(30) Priorität: 21.11.2008 DE 102008043954
(43) Veröffentlichungstag der Anmeldung: 26.05.2010
(73) Patentinhaber: Robert Bosch GmbH, 70442 Stuttgart (DE)
(72) Erfinder: Warzelhan, Jan Karl, 31135 Hildesheim (DE)

(56) Entgegenhaltungen:
- WO-A2-02/069267
- JP-A- 2007 135 093
- US-A1- 2003 059 106
- US-A1- 2004 064 464

## Beschreibung

### Stand der Technik

Die Erfindung betrifft ein Sensornetzwerksystem zur Verfolgung von bewegten Objekten in einem Überwachungsbereich mit einer Mehrzahl von Netzwerkknoten, die jeweils einem Teilbereich des Überwachungsbereichs zugeordnet und/oder zuordbar sind, wobei mindestens einer der Netzwerkknoten einen Klassifikatorgenerator aufweist, wobei der Klassifikatorgenerator programmtechnisch und/oder schaltungstechnisch ausgebildet ist, einen Iokalen Klassifikator zur Diskriminierung der in dem zugeordneten Teilbereich relevanten bewegten Objekte zu trainieren, und wobei der Netzwerkknoten ausgebildet ist, Objektinformationen der bewegten Objekte an andere Netzwerkknoten weiter zu geben, um bewegte Objekte, die sich von dem Netzwerkknoten zu den anderen Netzwerkknoten bewegen, zu verfolgen und/oder wieder zu erkennen. Die Erfindung betrifft auch ein Übertragungsprotokoll, ein Verfahrens zum Wiedererkennen eines Objekts und ein Computerprogramm.

Überwachungssysteme werden an öffentlichen Plätzen, in öffentlichen Gebäuden oder anderen Überwachungsbereichen eingesetzt, um, mittlerweile automatisiert, Personen oder andere relevante Objekte zu detektieren und innerhalb des Überwachungsbereichs zu verfolgen. Nachdem derartige Überwachungsbereiche sehr komplex ausgestaltet sind und üblicher Weise Zwischenbereiche aufweisen, welche nicht überwacht werden, stellt die Verfolgung eines bewegten Objekts von einem überwachten Teilbereich in den nächsten überwachten Teilbereich eine technische Herausforderung dar.

Prinzipiell ist es möglich, ein gewünschtes bewegtes Objekt aus einer Vielzahl von bewegten Objekten herauszufiltern und wieder zu erkennen, zum Beispiel indem sogenannte Klassifikatoren eingesetzt werden. Klassifikatoren bilden den Merkmalsraum einer Menge - in diesem Fall aller bewegten Objekte in dem Überwachungsbereich - in eine Menge von Klassen ab, wobei die Klassifikatoren oftmals hierarchisch oder baumartig gestaffelt werden. Bei einer baumartigen Staffelung wird ein Abfrageobjekt an einem Wurzelknoten in einen Klassifizierungsbaum eingegeben und dann bis zu einem Blattknoten, dem Klassifizierungsergebnis, verarbeitet. Derartige Klassifikatoren sind in der Bildverarbeitung hinreichend bekannt.

Die Druckschrift Publication Number JP2007-135093 (Application Number: 2005-327873) offenbart ein Videoüberwachungssystem mit einer Vielzahl von Kameras, welche in einem komplexen Überwachungsbereich aufgestellt sind und miteinander kommunizieren. Bei diesem System werden Informationen über das bewegte Objekt, wie zum Beispiel Objektgröße, Objektgeschwindigkeit, Objektrichtung, Objektfarbe und Objektgattung von einer Kamera zu einer nächsten Kamera zur Weiterverfolgung des Objekts übergeben.

Die Druckschrift JP 2007135093 betrifft ein Video Monitoring System mit einer Mehrzahl von Kameras, welche untereinander kommunizieren können.

Die Druckschriften US 2003/059106A1 und US 2004/064464A1 betreffen jeweils Verfahren und Computersysteme zur Erzeugung von hierarchischen System auf Basis von Klassifikatoren.

### Offenbarung der Erfindung

Gemäß der Erfindung wird ein Sensornetzwerk mit den Merkmalen des Anspruchs 1, ein Übertragungsprotokoll mit den Merkmalen des Anspruchs 8, ein Verfahren mit den Merkmalen des Anspruchs 10 und ein Computerprogramm mit den Merkmalen des Anspruchs 11 vorgeschlagen. Bevorzugte oder vorteilhafte Ausführungsformen der Erfindung ergeben sich aus den Unteransprüchen, der nachfolgenden Beschreibung sowie den beigefügten Figuren.

Die Erfindung betrifft ein Sensornetzwerksystem, insbesondere Überwachungssystem, im Speziellen ein Videoüberwachungssystem, zur Verfolgung von bewegten Objekten in einem Überwachungsbereich. Die bewegten Objekte können prinzipiell beliebig ausgebildet sein, zum Beispiel Personen, jedoch auch als Tiere, Gegenstände, Autos, Kraftfahrzeuge etc. Der Überwachungsbereich kann ebenfalls beliebig ausgebildet sein, zum Beispiel ein Flächenbereich, wie z.B. ein Straßenzug oder eine Kreuzung, oder auch ein dreidimensionaler Bereich, wie zum Beispiel ein Gebäude mit verschiedenen Stockwerken.

Das Sensornetzwerksystem umfasst eine Mehrzahl von Netzwerkknoten, welche jeweils einem Teilbereich des Überwachungsbereichs zugeordnet und/oder zuordenbar sind. Die Teilbereiche sind hierbei tatsächliche Abschnitte des Überwachungsbereichs, welche überlappen, jedoch auch überlappungsfrei zueinander angeordnet sein können. Bevorzugt sind jedem Netzwerkknoten mindestens ein Sensor, vorzugsweise mehrere Sensoren zugeordnet. Dabei kann es sich beispielsweise um eine oder mehrere Überwachungskameras, alternativ oder ergänzend jedoch auch um andere Sensoren, wie zum Beispiel Mikrofone, Empfänger für elektromagnetische Strahlung, Geruchssensoren, Gewichtssensoren etc. handeln. Die Sensoren sind zur Erfassung von Sensordaten in dem zugeordneten Teilebereich geeignet, ausgebildet und/oder angeordnet.

Mindestens einer, vorzugsweise einige und insbesondere alle Netzwerkknoten weisen einen Klassifikatorgenerator und optional einen Klassifikatorauswerter auf. Die beiden Module können in dem Netzwerkknoten integriert oder auch nur logisch und/oder signaltechnisch mit diesem verbunden sein.

Der Klassifikatorgenerator ist ausgebildet, für den Netzwerkknoten bzw. für dessen zugeordneten Teilbereich einen Iokalen Klassifikator zu trainieren, welcher sich auf die relevanten, bewegten Objekte des zugeordneten Teilbereichs konzentriert. Der Klassifikator ist vorzugsweise begrenzt auf eine Teilmenge aller bewegten Objekte in dem Überwachungsbereich, wobei die Teilmenge die in dem Teilbereich existenten, bewegten Objekte betrifft. Vorzugsweise werden unter relevante Objekte die Objekte verstanden, welche einer bestimmten Objektgattung (Person, Auto, etc.) angehören und/oder welche sich in einem definierten Zeitbereich in dem Teilbereich aufhalten bzw. aufgehalten haben.

Der optionale Klassifikatorauswerter ist ausgebildet, einen beliebigen oder den von dem Klassifikatorgenerator trainierten Iokalen Klassifikator seines Netzwerkknotens auf ein bewegtes Objekt - nachfolgend auch Anfrageobjekt genannt - anzuwenden, welches in dem zugeordneten Teilbereich des Netzwerkknotens angeordnet ist.

Unter einem Klassifikator wird vorzugsweise eine Entscheidungshierarchie verstanden, welche ausgebildet ist, die bei dem Training und/oder bei der Generierung der Entscheidungshierarchie verwendeten bewegten Objekte in Klassen einzuteilen, um auf diese Weise die jeweiligen Objekte wieder zu erkennen.

Mit dem Ziel, Objekte über mindestens zwei Netzwerkknoten, insbesondere über das gesamte Netzwerksystem zu verfolgen, sind die Netzwerkknoten ausgebildet, Objektinformationen der bewegten Objekte an andere Netzwerkknoten weiter zu geben.

Erfindungsgemäß wird vorgeschlagen, dass die Objektinformationen als der Iokale Klassifikator ausgebildet sind.

Es ist eine Erkenntnis der Erfindung, dass es kaum bis schwer möglich ist, sämtliche gesammelten Informationen über alle bewegte Objekte in dem Sensornetzwerk an alle Netzwerkknoten zu übermitteln. Betrachtet man beispielsweise ein Sensornetzwerk mit mehreren hundert Netzwerkknoten und eine entsprechend große Anzahl von bewegten Objekten, so ist das zu übertragende Datenvolumen zu groß. Es ist somit problematisch, mit einem vertretbaren Aufwand eine Objektverfolgung im gesamten Überwachungsbereich zu führen. Objekte können durch eine Vielzahl von Merkmalen beschrieben werden, z.B. durch globale als auch durch lokale Merkmale, wobei die Merkmale eine Vielzahl von Dimensionen aufweisen können. Dadurch können sehr viele Daten pro Objekt angesammelt werden, insbesondere da das Objekt typischerweise über mehrere Frames beobachtet wird.

In der Erfindung wird dagegen eine Vorrichtung offenbart, welche zum Einen statt der Objektmerkmale Klassifikatoren überträgt und zum zweiten die Klassifikatoren nur auf die Teilmenge von bewegten Objekten begrenzt, die relevant für den den Klassifikator erzeugenden oder trainierenden Netzwerkknoten ist oder war. Befinden sich beispielsweise nur vier bewegte Objekte in dem Teilbereich, der einem Netzwerkknoten zugordnet ist, so muss der lokale Klassifikator nur zwischen diesen vier Objekten diskriminieren können. Dabei kann der Klassifikator zur Auswahl von Einzelklassifikatoren auf sämtliche verfügbaren Merkmale der vier Objekte zurückgreifen. Möglicherweise zeigen die vier Objekte gänzlich unterschiedliche Größen oder Farben, so dass eine einfache Diskriminierung nach Farbe oder Größe möglich ist. Hier zeigt sich der Vorteil der Erfindung, dass auch die Klassifikatoren sehr knapp gehalten werden können. Somit werden zur Wiedererkennung nicht die Merkmale z.B. an eine anderen Kamera oder in eine zentrale Einrichtung übermittelt, sondern es werden lokal, z.B. in der Kamera, Klassifikatoren trainiert die nur die aktuell auftretenden oder relevante Objekte unterscheiden können. Diese Klassifikatoren können sich eine Teilmenge von Merkmalen und sogar nur Dimensionen raussuchen um die aktuell auftretenden Objekte zu unterscheiden.

Bei einer Konkretisierung der Erfindung wird vorgeschlagen, dass der Netzwerkknoten so ausgestaltet ist, dass der lokale Klassifikator an die anderen Netzwerkknoten weiter gegeben wird, denen benachbarte Teilbereiche zu dem Teilbereich des lokalen Klassifikators in dem Überwachungsbereich zugeordnet sind. Die Idee dieser Konkretisierung liegt darin, dass das bewegte Objekt entweder in dem ursprünglichen Teilbereich verbleibt oder zu einem räumlich benachbarten Teilbereich wechselt. Auf jeden Fall ist das Objekt jederzeit ohne Probleme zu identifizieren: In dem ursprünglichen Teilbereich findet es der ursprüngliche lokale Klassifikator, in den benachbarten Teilbereichen wird das Objekt durch den übertragenden lokalen Klassifikator ebenso einfach und sicher wieder entdeckt.

Bei einer vorteilhaften Ausgestaltung der Erfindung ist der Klassifikatorgenerator so realisiert, dass der lokale Klassifikator auf Objekte trainiert wird, welche in dem zugeordneten Teilbereich des Netzwerkknotens innerhalb einer vorgebbaren Zeitspanne anwesend und/oder existent sind bzw. waren. Beispielsweise werden Objekte mit einem Alter größer als eine bestimmte Grenze automatisch deaktiviert. Auf diese Weise ist es möglich, den Klassifikator schlank zu halten. Optional können, beispielsweise zur Initialisierung, ergänzende Initialisierungsobjekte beim Training des lokalen Klassifikators verwendet werden. Beispielsweise empfiehlt es sich für den Fall, dass in dem zugeordneten Teilbereich nur ein einziges bewegtes Objekt existent ist, den Klassifikator zumindest unter Verwendung dieses bewegten Objekts und eines vorgebbaren Initialisierungsobjekts zu trainieren. Das Initialisierungsobjekt kann zu einem späteren Zeitpunkt wieder deaktiviert werden.

Der Klassifikatorauswerter ist vorzugsweise ausgebildet, auf ein Anfrageobjekt, also auf ein von dem oder den Sensoren entdecktes Objekt, den lokalen Klassifikator des eigenen Netzwerkknotens und/oder den oder die lokalen Klassifikatoren der anderen Netzwerkknoten anzuwenden, welche den benachbarten Teilbereichen zugeordnet sind. Wird bei der Anwendung festgestellt, dass das Anfrageobjekt durch den eigenen lokalen Klassifikator positiv erkannt wird, so wird angenommen, dass sich das Anfrageobjekt immer noch im gleichen Teilbereich befindet.

Vorzugsweise ist vorgesehen, dass bei einem positiven Anwenden von einem der lokalen Klassifikatoren der anderen Netzwerkknoten, welche den benachbarten Teilbereichen zugeordnet sind, das Anfrageobjekt als wiedererkannt zu werten. Als Reaktion wird dem wiedererkannten Anfrageobjekt oder Objekt dann beispielsweise eine neue Position oder eine bereits vorhandene ID zugeordnet. Mit diesem Vorgehen kann für ein Objekt eine Verfolgung über das komplette Sensornetzwerksystem durchgeführt werden.

Optional ist vorgesehen, dass der Netzwerkknoten bei einem Wiedererkennen des Anfrageobjekts durch einen der lokalen Klassifikatoren der anderen Netzwerkknoten eine Deaktivierungsmitteilung an den betroffenen Netzwerkknoten sendet, welche zuvor den positiv angewandten Klassifikator übermittelt hat. Mit dieser Deaktivierungsmitteilung wird dem betroffenen Netzwerkknoten mitgeteilt, dass das Anfrageobjekt nun in dem Teilbereich des aktuellen Netzwerkknotens angekommen ist.

Bei einer möglichen Reaktion kann vorgesehen sein, dass nach Eingang einer derartigen Deaktivierungsmitteilung und/oder nach dem Wiedererkennen eines Anfrageobjekts aus einem benachbarten Netzwerkknoten und/oder bei Erkennen eines Neuobjekts der lokale Klassifikator neu trainiert bzw. aktualisiert wird. In jedem der genannten Fälle ändert sich die Menge der relevanten Objekte für den lokalen Klassifikator, so dass eine Aktualisierung des Klassifikators sinnvoll oder sogar notwendig erscheint.

Ein weiterer Gegenstand der Erfindung betrifft ein Übertragungsprotokoll zur Übertragung von Objektinformationen von einem Netzwerkknoten, vorzugsweise aus einem Sensornetzwerksystem der vorgehenden Ansprüche. Das Übertragungsprotokoll weist lokale Klassifikatoren von bewegten Objekten eines Teilbereichs eines Überwachungsbereichs auf, wobei die lokalen Klassifikatoren von dem Netzwerkknoten zu anderen Netzwerkknoten übertragen werden, die räumlich benachbarten Teilbereichen zu dem ersten Netzwerkknoten zugeordnet sind.

Ein nächster Gegenstand der Erfindung betrifft ein Verfahren zum Wiedererkennen eines Objekts in einem Sensornetzwerksystem zur Überwachung eines Überwachungsbereichs, vorzugsweise wie zuvor beschrieben beziehungsweise nach einem der vorhergehenden Ansprüche, mit den Schritten:
- Training und/oder Erstellung eines lokalen Klassifikators für einen räumlichen Teilbereich des Überwachungsbereichs über die relevanten bewegten Objekte in dem räumlichen Teilbereich;
- Übertragung des lokalen Klassifikators an einen Netzwerkknoten eines räumlich benachbarten Teilbereichs;
- Suche nach einem der relevanten bewegten Objekte in dem Teilbereich des zweiten Netzwerkknotens.

Ein letzter Gegenstand der Erfindung betrifft ein Computerprogramm mit den Merkmalen des Anspruchs 10.

Weitere Merkmale, Vorteile und Wirkungen der Erfindung ergeben sich aus der nachfolgenden Beschreibung eines bevorzugten Ausführungsbeispiels der Erfindung sowie den beigefügten Figuren. Dabei zeigen:
- Figur 1: ein schematisches Blockdiagramm eines Netzwerksystems als ein erstes Ausführungsbeispiel der Erfindung;
- Figur 2: eine Abbildung eines Klassifikators zum Einsatz in dem Netzwerksystem gemäß Figur 1;
- Figur 3: eine Knotendarstellung des Sensornetzwerksystems gemäß der Figur 1.

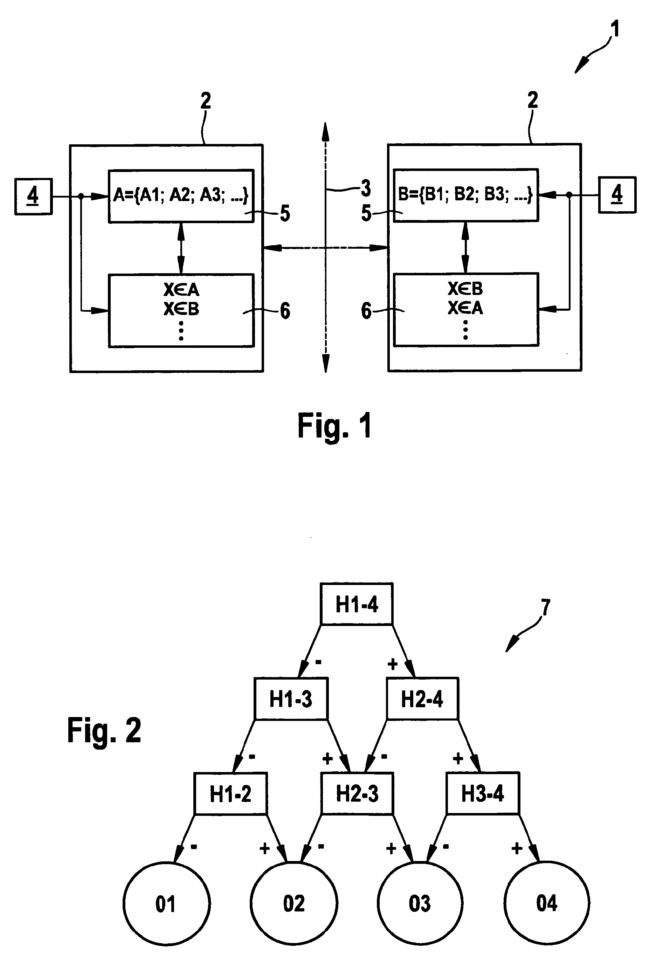

Die Figur 1 zeigt in einer schematischen Blockdarstellung ein Sensornetzwerksystem 1, welches zur Überwachung eines Überwachungsbereichs, wie zum Bespiel einem Gebäude, einem Straßenzug oder dergleichen geeignet und/oder ausgebildet ist. Das Sensornetzwerksystem 1 umfasst eine Mehrzahl von Netzwerkknoten 2, welche über ein Netzwerk 3 miteinander kommunizierend verbunden und/oder verbindbar sind. Das Netzwerk 3 kann beliebig, insbesondere kabelgebunden oder kabellos zum Beispiel als LAN, WLAN, Internet etc. ausgebildet sein. Das Sensornetzwerksystem 1 kann eine Vielzahl, zum Beispiel mehr als 50 oder 100 Netzwerkknoten 2 umfassen.

Der Netzwerkknoten 2 ist mit einem oder mehreren Sensoren 4 verbunden, wobei die Sensoren 4 eines der Netzwerkknoten 2 auf einen dem Netzwerkknoten 2 zugeordneten Teilbereich des Überwachungsbereichs gerichtet sind. Der Sensor 4 kann beispielsweise als eine oder mehrere Überwachungskameras, jedoch auch als Mikrofon, Gewichtssensor, Sensor für elektromagnetische Strahlung etc. ausgebildet sein. Über die Sensoren 4 werden bewegte Objekte, wie zum Beispiel Personen, in dem zugeordneten Teilbereich sensorisch erfasst und die Sensordaten an den Netzwerkknoten 2 weitergeleitet.

In dem Netzwerkknoten 2 ist ein Klassifikatorgenerator 5 integriert beziehungsweise mit diesem signaltechnisch verbunden, wobei der Klassifikatorgenerator 5 ausgebildet ist, einen Klassifikator 7 (Figur 2) auf Basis der in dem zugeordneten Teilbereich existenten Objekte zu trainieren. Dabei ist der Klassifikator 7 darauf beschränkt, genau die Objekte diskriminieren zu können, die in dem zugeordneten Teilbereich vorhanden sind, weitere reale Objekte aus dem Sensornetzwerksystem 1 bzw. dem Überwachungsbereich werden (zunächst) ignoriert. Zudem weist der Netzwerkknoten 2 einen Klassifikatorauswerter 6 auf, welcher ausgebildet ist, Klassifikatoren 7 auf ein Anfrageobjekt anzuwenden.

Die Figur 2 zeigt in einer schematischen Darstellung einen Klassifikator 7 für eine begrenzte Anzahl von Objekten, wobei beispielhaft vier Objekte 01, 02, 03 und 04 dargestellt sind. Bei der gezeigten Ausführungsform des Klassifikators 7 werden Einzelklassifikatoren H1 - H4 zwischen Paaren von Objekten trainiert. Zum Beispiel ist der Einzelklassifikator H1 - 2 zur Diskriminierung der Objekte O1 und 02 ausgebildet. Die Antwort des Einzelklassifikators H kann entweder negativ (= Objekt O1) oder positiv (= Objekt 02) sein und entsprechend an den linken oder den rechten Pfad im Baum des Klassifikators 7 weiterverweisen.

Ein Anfrageobjekt wird immer am Wurzelknoten (oben) in den Klassifizierungsbaum eingegeben und purzelt dann im Klassifizierungsbaum bis zum Blattknoten, dem Klassifizierungsergebnis, in der letzten Zeile. Es ist auch möglich, andere Klassifikatoren - wie sie aktuell in der Literatur bekannt sind - zu verwenden.

In der Figur 1 ist der Klassifikator 7 in den zwei Netzwerkknoten 2 ein Mal in Mengenschreibweise als Menge A und ein zweites Mal in Mengenschreibweise als Menge B wie folgt dargestellt:
A={A 1; A2; A3; ...}
B={B1; B2; B3; ...},
wobei der Klassifikator 7: A oder B auf die Objekte der zugeordneten Menge trainiert ist.

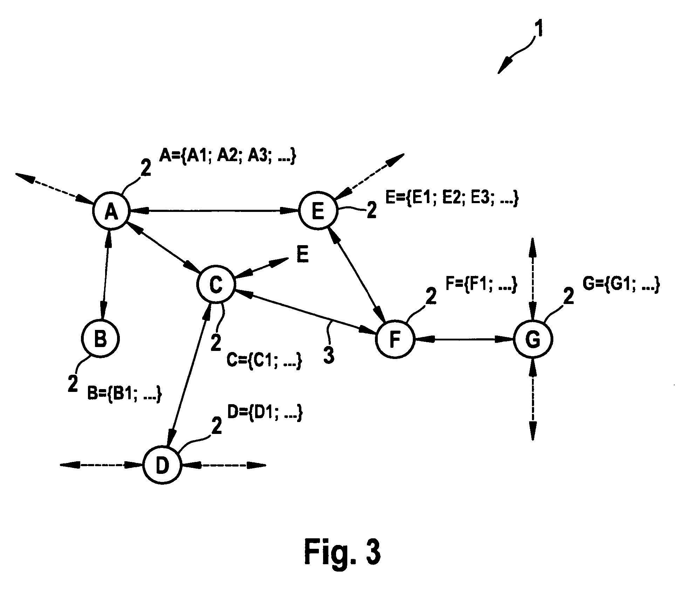

Die Funktionsweise des Sensornetzwerksystems 1 wird nachfolgend anhand der Darstellung in der Figur 3 erläutert: Die Figur 3 zeigt das Sensornetzwerksystem 1 in einer Knotendarstellung, wobei eine Mehrzahl von Netzwerkknoten 2 visualisiert sind, die untereinander über das Netzwerk 4 verbunden sind. Zum einen illustriert die Figur 3 die signaltechnische Verschaltung der Netzwerkknoten 2, zum zweiten repräsentiert die Figur 3 auch die räumliche Nähe der zu den Netzwerkknoten 2 zugeordnete Teilbereiche im Überwachungsbereich und deren räumliche Verbindungen untereinander. So ist es beispielsweise nur möglich, den Teilbereich des Netzwerkknotens B über den Teilbereich des Netzwerkknotens 2: A zu erreichen. Der Teilbereich des Netzwerkknotens 2: C ist dagegen über einen Eingang E und die Teilbereiche der Netzwerkknoten 2: A, F und D zu erreichen. Die Kenntnis der Topologie des Sensornetzwerksystems 1 bzw. der zugeordneten Teilbereiche kann zum Beispiel automatisch gelernt werden oder manuell beim Installieren der Netzwerkknoten 2 angegeben werden. Jeder der Netzwerkknoten 2: A-G weist einen Klassifikator 7 auf, welcher in der Figur 3 analog zu der Figur 1 in Mengenschreibweise dargestellt ist und jeweils auf die in dem zugeordneten Teilbereich relevanten Objekte trainiert bzw. begrenzt ist.

Tritt nun ein neues oder scheinbar neues Objekt in einem Teilbereich der Netzwerkknoten 2: A-G, zum Beispiel in Netzwerkknoten 2: C auf, fordert der Netzwerkknoten 2: C von allen Netzwerkknoten 2, deren Teilbereiche räumlich benachbart zu dem Teilbereich des Netzwerkknotens 2: C sind (A, D, F), die Klassifikatoren 7: A, D, F an. Für den Fall, dass in einem der benachbarten Netzwerkknoten 2: A, D, F vor einer bestimmten Zeit, zum Beispiel einer nötigen Transferzeit zwischen den Teilbereichen der Netzwerkknoten (plus eine gewisse Toleranzzeit) mangels Objekten kein Klassifikator 7 aufgebaut wurde, kann das verfolgte Objekt nicht aus dieser Richtung und von diesen Netzwerkknoten 2 kommen. Netzwerkknoten 2: A, D, F, die einen Klassifikator 7 aufgebaut haben, übermitteln diesen Klassifikator 7 an den fordernden Netzwerkknoten 2, in diesem Fall C. Der anfordernde Netzwerkknoten 2: C evaluiert zunächst den eigenen Klassifikator 7: C, bei einem negativen Ergebnis werden die von den benachbarten Netzwerkknoten 2 angeforderten Klassifikatoren 7: A, D, F evaluiert. Spricht ein Klassifikator 7 im erforderlichen Maß auf das Objekt an, wurde das Objekt wiedererkannt und kann somit zum Beispiel die ID (Identifikationsnummer) des Objektes von dem sendenden Netzwerkknoten 2 weiter verwenden (das Objekt wurde wieder erkannt). Sind die Klassifizierungsergebnisse aller Klassifikatoren 7 unter dem erforderlichen Maß, wurde ein neues Objekt erfunden, dies kann zum Beispiel ein durch den Eingang E eintretendes Objekt gewesen sein.

Bei einem Objekt A1, welches von dem Teilbereich des Netzwerkknotens 2: A zu dem Teilbereich des Netzwerkknotens 2: C wechselt, werden die Klassifikatoren 7: A, C wie folgt geändert:

| | | | |
|---|---|---|---|
| Deaktivierung: | A={A1; A2; A3; ...} | --> | A={ A2; A3; ...} |
| Übernahme: | C={C1; C2; C3; ...} | --> | C={A1; C1; C2; C3; ...}. |

Bei einem neuen Objekt E1, welches den Überwachungsbereich des Sensornetzwerkes 1 erstmalig durch den Eingang E im Teilbereich des Netzwerkknotens 2: C betritt, wird nur der Klassifikator 7: C geändert:

| | | | |
|---|---|---|---|
| Neuaufnahme: | C={C1; C2; C3; ...} | --> | C={E1; C1; C2; C3; ...}. |

Bei der Inbetriebnahme des Sensornetzwerksystems 1 kann es zu einem Initialisierungsproblem des Sensornetzwerksystems 1 kommen, wenn keine oder nicht ausreichend Objekte vorhanden sind. Eine mögliche Gegenstrategie liegt darin, den Netzwerkknoten 2 ein zufälliges Initialisierungsobjekt, bestehend aus zufälligen Merkmalen aller Sensoren 4 vorzugeben. Ein neu auftretendes Objekt wird dann gegen dieses Initialisierungsobjekt trainiert, um so mindestens zwei Objekte zum Trainieren des Klassifikators 7 zu haben. Treten im Folgenden weitere Objekte im Teilbereich desselben Netzwerkknotens 2 auf, kann das Initialisierungsobjekt wieder weggelassen (deaktiviert) werden und der Klassifikator 7 wird nun mittels realer Objekte trainiert.

Es ist möglich, dass ein sogenanntes Ähnlichkeitsproblem zwischen zwei Objekten (sind die Objekte gleich oder ungleich) in dem selben Netzwerkknoten 2 zu lösen ist. Hierbei können innerhalb eines Netzwerkknotens 2 bekannte Verfahren eingesetzt werden, wobei bevorzugt alle Merkmale der zu vergleichenden Objekte eingesetzt werden. Vorzugsweise wird nämlich bei scheinbar neu auftretenden Objekten erst an Hand eines Großteils oder aller Merkmale überprüft, ob es sich tatsächlich um ein neues Objekt in dem dem Netzwerkknoten 2 zugeordneten Teilbereich handelt und nicht um ein bereits analysiertes Objekt, welches bereits zum Trainieren des lokalen Klassifikators 7 verwendet wurde. Erst dann werden die Klassifikatoren 7 der Netzwerkknoten 2 der benachbarten Teilbereiche eingesetzt.

Besonders vorteilhaft kann der Aufbau bei dezentraler Hardware eingesetzt werden, zum Beispiel Smartcameras, da nur wenig Speicherbedarf für die Übermittlung von den Klassifikatoren 7 benötigt wird.

Zusammenfassend sind mögliche Vorteile der Erfindung, die Komplexität des Problems der Wiedererkennung von Objekten zu reduzieren, indem man sich auf die lokal auftretenden Objekte beschränkt und versucht nur diese zu unterscheiden. In dem beschriebenen Verfahren werden die Klassifikatoren 7 gezielt auf die in einem Netzwerkknoten 2 im Sensornetzwerksystem 1 auftretende Objekte trainiert, um diese möglichst gut zu unterscheiden. Im Gegensatz zu Klassifikatoren 7 (oder allgemein Verfahren), die alle auftretende Objekte unterscheiden müssen, reduziert sich so die Komplexität und gleichzeitig erhöht sich die Robustheit, da es nur wenige Objekte zu unterscheiden gilt.

## Patentansprüche

1. Sensornetzwerksystem (1) zur Verfolgung von bewegten Objekten in einem Überwachungsbereich
mit einer Mehrzahl von Netzwerkknoten (2), die jeweils einem Teilbereich des Überwachungsbereichs zugeordnet sind,
wobei der Netzwerkknoten (2) ausgebildet ist, Objektinformationen der bewegten Objekte an andere Netzwerkknoten (2) weiterzugeben, um bewegte Objekte, die sich von dem Netzwerkknoten (2) zu den anderen Netzwerkknoten bewegen, zu verfolgen und/oder wiederzuerkennen,
**dadurch gekennzeichnet,**
**dass** mindestens einer der Netzwerkknoten (2) einen Klassifikatorgenerator (5) aufweist,
wobei der Klassifikatorgenerator (5) programmtechnisch und/oder schaltungstechnisch ausgebildet ist, einen lokalen Klassifikator (7) zur Diskriminierung der in dem zugeordneten Teilbereich relevanten bewegten Objekte zu trainieren, wobei der lokale Klassifikator auf eine Teilmenge aller bewegten Objekte in dem Überwachungsbereich begrenzt ist, und wobei die Objektinformationen als der lokale Klassifikator (7) ausgebildet sind.

2. Sensornetzwerksystem (1) nach Anspruch 1, **dadurch gekennzeichnet, dass** der Netzwerkknoten (2) ausgebildet ist, den lokalen Klassifikator (7) an die anderen Netzwerkknoten (7) weiterzugeben, denen benachbarte Teilbereiche in dem Überwachungsbereich zugeordnet sind.

3. Sensornetzwerksystem (1) nach Anspruch 1 oder 2, **dadurch gekennzeichnet, dass** der Klassifikatorgenerator (5) ausgebildet ist, den lokalen Klassifikator (7) auf die in dem zugeordneten Teilbereich innerhalb einer vorgebbaren Zeitspanne anwesenden und/oder existenten Objekte zzgl. optional ergänzender Initialisierungsobjekte zu trainieren.

4. Sensornetzwerksystem (1) nach einem der vorhergehenden Ansprüche, **gekennzeichnet durch** einen Klassifikatorauswerter (6), der programmtechnisch und/oder schaltungstechnisch ausgebildet ist, einen oder den lokalen Klassifikator (7) auf ein bewegtes Objekt in dem zugeordneten Teilbereich anzuwenden.

5. Sensornetzwerksystem (1) nach Anspruch 4, **dadurch gekennzeichnet, dass** der Klassifikatorauswerter (6) ausgebildet ist, auf ein Anfrageobjekt den lokalen Klassifikator (7) des eigenen Netzwerkknotens und/oder den oder die lokalen Klassifikatoren (7) der anderen Netzwerkknoten (2) anzuwenden.

6. Sensornetzwerksystem (1) nach Anspruch 5, **dadurch gekennzeichnet, dass** der Netzwerkknoten ausgebildet ist, bei einem Wiedererkennen des Anfrageobjekts durch einen der lokalen Klassifikatoren (7) der anderen Netzwerkknoten (2), das Anfrageobjekt als wiedererkannt zu werten.

7. Sensornetzwerksystem (1) nach einem der vorhergehenden Ansprüche 4 bis 6, **dadurch gekennzeichnet, dass** der Netzwerkknoten (2) ausgebildet ist, bei einem Wiedererkennen des Anfrageobjekts durch einen der lokalen Klassifikatoren (2) der anderen Netzwerkknoten (2), eine Deaktivierungsmitteilung zur Deaktivierung des Anfrageobjekts aus dem Klassifikator (7) an den betroffenen Netzwerkknoten zu übermitteln.

8. Sensornetzwerksystem (1) nach einem der vorhergehenden Ansprüche, **dadurch gekennzeichnet, dass** der Netzwerkknoten (2) ausgebildet ist, nach Eingang einer Deaktivierungsmitteilung und/oder nach dem Wiedererkennen eines Anfrageobjekts aus einem benachbarten Netzwerkknoten und/oder bei Erkennen eines Neuobjekts, den lokalen Klassifikator (7) neu zu trainieren und/der zu aktualisieren.

9. Übertragungsprotokoll zur Übertragung von Objektinformationen von einem Netzwerkknoten (2) aus einem Sensornetzwerksystem (1) der vorhergehenden Ansprüche, **dadurch gekennzeichnet, dass** durch das Übertragungsprotokoll lokale Klassifikatoren (7) von bewegten Objekten eines Teilbereichs eines Überwachungsbereichs von dem Netzwerkknoten (2) an andere Netzwerkknoten, denen räumlich benachbarte Teilbereiche zugeordnet sind, übertragen werden.

10. Verfahren zum Wiedererkennen eines Objekts in einem Sensornetzwerksystem (1) nach einem der vorhergehenden Ansprüche, wobei für einen Teilbereich mit bewegten Objekten ein lokaler Klassifikator (7) trainiert/erstellt wird, wobei der lokale Klassifikator (7) an einen benachbarten Netzwerkknoten (2) übertragen wird und wobei der benachbarte Netzwerkknoten (2) eines der bewegten Objekte in dem eigenen Teilbereich sucht.

11. Computerprogramm mit Programm-Code Mitteln, um alle Schritte des Verfahrens nach Anspruch 10 durchzuführen, wenn das Programm auf einem Computer und/oder einem Sensornetzwerksystem (1) nach einem der vorhergehenden Ansprüche ausgeführt wird.

## Claims

1. Sensor network system (1) for tracking moving objects in a monitoring region,
having a plurality of network nodes (2) which are each associated with a subregion of the monitoring region,
wherein the network node (2) is designed to forward object information from the moving objects to other network nodes (2) in order to track and/or recognize moving objects which move from the network node (2) to the other network nodes,
**characterized**
**in that** at least one of the network nodes (2) has a classifier generator (5),
wherein the classifier generator (5) has its programming and/or circuitry designed to train a local classifier (7) to discriminate between the moving objects which are relevant in the associated subregion, wherein the local classifier is limited to a subset of all the moving objects in the monitoring region, and wherein the object information is in the form of the local classifier (7).

2. Sensor network system (1) according to Claim 1, **characterized in that** the network node (2) is designed to forward the local classifier (7) to the other network nodes (2) which have associated adjacent subregions in the monitoring region.

3. Sensor network system (1) according to Claim 1 or 2, **characterized in that** the classifier generator (5) is designed to train the local classifier (7) for the objects which are present and/or exist in the associated subregion within a prescribed period of time, plus optionally added initialization objects

4. Sensor network system (1) according to one of the preceding claims, **characterized by** a classifier evaluator (6) in which the programming and/or circuitry is designed to apply a or the local classifier (7) to a moving object in the associated subregion.

5. Sensor network system (1) according to Claim 4, **characterized in that** the classifier evaluator (6) is designed to apply to a query object the local classifier (7) from its own network node and/or the local classifier(s) (7) from the other network nodes (2).

6. Sensor network system (1) according to Claim 5, **characterized in that** the network node is designed to rate the query object as recognized when the query object is recognized by one of the local classifiers (7) from the other network nodes (2).

7. Sensor network system (1) according to one of the preceding claims 4 to 6, **characterized in that** the network node (2) is designed to transmit a deactivation message for deactivating the query object from the classifier (7) to the relevant network node when the query object is recognized by one of the local classifiers (7) from the other network nodes (2).

8. Sensor network system (1) according to one of the preceding claims, **characterized in that** the network node (2) is designed to retrain and/or update the local classifier (7) when a deactivation message has been received and/or when a query object from an adjacent network node has been recognized and/or when a new object is recognized.

9. Transmission protocol for transmitting object information from a network node (2) from a sensor network system (1) from the preceding claims, **characterized in that** the transmission protocol transmits local classifiers (7) for moving objects in a subregion of a monitoring region from the network node (2) to other network nodes which have associated physically adjacent subregions.

10. Method for recognizing an object in a sensor network system (1) according to one of the preceding claims, wherein a local classifier (7) is trained/created for a subregion with moving objects, wherein the local classifier (7) is transmitted to an adjacent network node (2), and wherein the adjacent network node (2) looks for one of the moving objects in its own subregion.

11. Computer program having program code means in order to carry out all the steps of the method according to Claim 10 when the program is executed on a computer and/or a sensor network system (1) according to one of the preceding claims.

## Revendications

1. Système de réseau de capteurs (1) pour le suivi d'objets en mouvement dans une zone de surveillance comprenant une pluralité de noeuds de réseau (2) qui sont respectivement associés à une zone partielle de la zone de surveillance,
le noeud de réseau (2) étant configuré pour retransmettre les informations d'objet sur les objets en mouvement à d'autres noeuds de réseau (2) afin de suivre et/ou de reconnaître de nouveau les objets en mouvement qui se déplacent du noeud de réseau (2) vers les autres noeuds de réseau,
**caractérisé en ce**
**qu'**au moins l'un des noeuds de réseau (2) présente un générateur de classificateur (5),
le générateur de classificateur (5) étant configuré par technique de programmation et/ou par technique de circuit pour former un classificateur local (7) à la discrimination des objets en mouvement pertinents dans la zone partielle associée, le classificateur local étant limité à une quantité partielle de tous les objets en mouvement dans la zone de surveillance et les informations d'objet étant configurées en tant que classificateur local (7).

2. Système de réseau de capteurs (1) selon la revendication 1, **caractérisé en ce que** le noeud de réseau (2) est configuré pour retransmettre le classificateur local (7) aux autres noeuds de réseau (2) dont les zones partielles voisines sont associées dans la zone de surveillance.

3. Système de réseau de capteurs (1) selon la revendication 1 ou 2, **caractérisé en ce que** le générateur de classificateur (5) est configuré pour former le classificateur local (7) aux objets présents et/ou existants dans la zone partielle associée à l'intérieur d'un intervalle de temps pouvant être prédéfini, en plus d'objets d'initialisation complémentaires optionnels.

4. Système de réseau de capteurs (1) selon l'une des revendications précédentes, **caractérisé par** un interpréteur de classificateur (6) qui est configuré, par technique de programmation et/ou par technique de circuit, pour utiliser un ou le classificateur local (7) sur un objet en mouvement dans la zone partielle associée.

5. Système de réseau de capteurs (1) selon la revendication 4, **caractérisé en ce que** l'interpréteur de classificateur (6) est configuré pour utiliser le classificateur local (7) du noeud de réseau propre et/ou le ou les classificateurs locaux (7) des autres noeuds de réseau (2) sur un objet interrogé.

6. Système de réseau de capteurs (1) selon la revendication 5, **caractérisé en ce que** le noeud de réseau est configuré pour, lors d'une nouvelle reconnaissance de l'objet interrogé par l'un des classificateurs locaux (7) de l'autre noeud de réseau (2), interpréter l'objet interrogé comme ayant été de nouveau reconnu.

7. Système de réseau de capteurs (1) selon l'une des revendications 4 à 6, **caractérisé en ce que** le noeud de réseau (2) est configuré pour, lors d'une nouvelle reconnaissance de l'objet interrogé par l'un des classificateurs locaux (7) de l'autre noeud de réseau (2), communiquer au noeud de réseau concerné une notification de désactivation afin de désactiver l'objet interrogé du classificateur (7).

8. Système de réseau de capteurs (1) selon l'une des revendications précédentes, **caractérisé en ce que** le noeud de réseau (2) est configuré pour, après la réception d'une notification de désactivation et/ou après la nouvelle reconnaissance d'un objet interrogé provenant d'un noeud de réseau voisin et/ou lors de la reconnaissance d'un nouvel objet, reformer et/ou actualiser le classificateur local (7).

9. Protocole de transmission pour la transmission d'informations d'objet d'un noeud de réseau (2) d'un système de réseau de capteurs (1) selon l'une des revendications précédentes, **caractérisé en ce que** des classificateurs locaux (7) d'objets en mouvement d'une zone partielle d'une zone de surveillance sont transmis par le protocole de transmission du noeud de réseau (2) à d'autres noeuds de réseau auxquels sont associées des zones partielles voisines dans l'espace.

10. Procédé pour de nouveau reconnaître un objet dans un système de réseau de capteurs (1) selon l'une des revendications précédentes, un classificateur local (7) étant formé/créé pour une zone partielle comprenant des objets en mouvement, le classificateur local (7) étant transmis à un noeud de réseau (2) voisin et le noeud de réseau (2) voisin recherchant l'un des objets en mouvement dans sa propre zone partielle.

11. Programme informatique comprenant des moyens de code de programme pour exécuter toutes les étapes du procédé selon la revendication 10 lorsque le programme est exécuté sur un ordinateur et/ou un système de réseau de capteurs (1) selon l'une des revendications précédentes.
